# EUROPEAN PATENT SPECIFICATION

(11) **EP 2 935 816 B1**
(45) Date of publication and mention of the grant of the patent: **20.02.2019**
(21) Application number: 13864459.6
(22) Date of filing: 05.12.2013
(51) Int. Cl.: B01F 5/04, B01F 5/06, B01F 3/04, F01N 3/28, F01N 13/08, F01N 3/20

(54) **ARRANGEMENT TO INSERT A LIQUID MEDIUM INTO EXHAUSTS FROM A COMBUSTION ENGINE**
ANORDNUNG ZUM EINBRINGEN EINES FLÜSSIGEN MEDIUMS IN ABGASE AUS EINEM VERBRENNUNGSMOTOR
AGENCEMENT D'INTRODUCTION D'UN MILIEU LIQUIDE DANS DES ÉCHAPPEMENTS D'UN MOTEUR À COMBUSTION

(30) Priority: 21.12.2012 SE 1251489
(43) Date of publication of application: 28.10.2015
(73) Proprietor: Scania CV AB, 151 87 Södertälje (SE)
(72) Inventor: HOLMBERG, Fredrik, SE-168 44 Bromma (SE); FURBO, Eric, S-141 61 Huddinge (SE); COLLING, Morgan, S-153 94 Hölö (SE); NORDIN, Niklas, S-118 56 Stockholm (SE); GÖRANSSON, Hans, S-125 34 Älvsjö (SE); BIRGERSSON, Henrik, S-117 65 Stockholm (SE); ERIKSSON, Tommy, S-138 39 Älta (SE)
(74) Representative: Scania CV AB
(86) International application number: PCT/SE2013/051458
(87) International publication number: WO 2014/098729

(56) References cited:
- EP-A1- 2 388 451
- WO-A1-2012/052690
- DE-A1-102009 036 511
- US-A1- 2010 005 791
- US-A1- 2010 212 301
- US-A1- 2012 020 854

## Description

### FIELD OF THE INVENTION AND PRIOR ART

The present invention relates to an arrangement to insert a liquid medium, for example urea, into exhausts from a combustion engine, according to the preamble of patent claim 1.

In order to meet current requirements regarding exhaust purification, today's motor vehicles are usually equipped with a catalytic converter in the exhaust pipe in order to achieve a catalytic conversion of environmentally harmful exhaust components into less environmentally harmful substances. One method used to achieve an effective catalytic conversion is based on injecting a reduction agent into the exhausts upstream of the catalytic converter. A reduction substance included in or created by the reduction agent is introduced into the catalytic converter by the exhausts where it is absorbed in active sites in the catalytic converter, which causes an accumulation of the reduction agent in the catalytic converter. The accumulated reduction agent may then react with an exhaust substance for the conversion of this exhaust substance into a substance with less environmental impact. Such a catalytic reduction converter may for example be of SCR-type (SCR = Selective Catalytic Reduction). This type of catalytic converter is referred to hereafter as an SCR-catalyst. An SCR-catalyst reduces NOₓ in the exhausts. In an SCR-catalytist a reduction agent in the form of urea is usually injected into the exhausts upstream of the catalytic converter. When urea is injected into the exhausts, ammonia is formed, and it is this ammonia which constitutes the reduction agent contributing to the catalytic conversion in the SCR-catalyst. The ammonia is accumulated in the catalytic converter by being absorbed in active sites in the catalytic converter, and NOₓ present in the exhausts is converted into nitrogen and water when brought into contact with accumulated ammonia at the active sites in the catalytic converter. DE102009036511 A1 shows an injector 3 for introducing an additive i.e. water urea mixture, into a tubular waste gas duct 2. The duct is provided between the input device and an exhaust gas treatment device. The duct has a deflecting device 5 with a labyrinth-like flow guidance. A mixing device 21 is arranged between the injector 3 and the deflection device 5 in the gas flow direction.

When urea is used as a reduction agent, it is injected into the exhaust pipe in the form of a liquid urea solution with the help of an injection element. The injection element comprises a nozzle via which the urea solution is injected into the exhaust pipe under pressure, atomised form as a spray. During long periods of a diesel engine's operation, the exhausts have a sufficiently high temperature to be able to vaporize the urea solution, so that ammonia is formed. However, it is difficult to avoid that a part of the added urea solution comes into contact with and sticks to the exhaust pipe's internal wall surface in an unevaporated state. When a combustion engine is operated in a consistent manner for a period of time, i.e. during a stationary operating condition, there are no substantial variations in the gas flow, and the urea solution injected into the exhausts will therefore hit essentially the same area of the exhaust pipe during this entire period of time. Under the impact of the relatively cool urea solution the temperature in this area of the exhaust pipe may be reduced locally to a temperature lower than 100°C, which in turn may lead to the formation of a film of urea solution in this area, which is then pulled along with the exhaust flow. Once this film has been moved a certain distance in the exhaust pipe, the water in the urea solution will boil off due to the hot exhausts. There remains solid urea, slowly evaporating by the heat in the exhaust pipe. If the supply of solid urea is greater than the evaporation, solid urea accumulates inside the exhaust pipe. If the layer of urea becomes sufficiently thick, the urea and its decomposition products will react with each other to form urea-based primitive polymers, so called urea lumps. Such urea lumps may, over time, block an exhaust pipe.

### OBJECTIVE OF THE INVENTION

The objective of the present invention is to achieve an arrangement of the type mentioned above, which creates improved possibilities of ensuring a good vaporisation of the injected reduction agent.

### SUMMARY OF THE INVENTION

According to the present invention, the above-mentioned objective is achieved with the help of an arrangement, having the features defined in patent claim 1.

The arrangement according to the invention comprises:
- a mixing chamber intended to be perfused by exhausts, wherein the mixing chamber is delimited in a radial direction outwards by a first tubular metal wall, and
which mixing chamber has an upstream end and a downstream end, and
- an injection element for injection of the liquid medium as a spray into the mixing chamber, and
- an exhaust channel adjacent to the mixing chamber, which is intended to be perfused by exhausts and extends along the outside of the first tubular wall, wherein the exhaust channel is delimited from the mixing chamber by the first tubular wall and delimited in a radial direction outwards by a second tubular wall, which is designed to guide the exhausts flowing through the exhaust channel to pass on the outside of the section of the first tubular wall which is intended to be impacted by said spray of a liquid medium from the injection element.

The section of the first tubular wall which is impacted by the spray from the injection element will thus be heated from its back by the exhausts flowing through said exhaust channel.

According to the invention a throttle is arranged in the section of the exhaust channel located closest to the upstream end of the mixing chamber, on the outside of said wall section of the first tubular wall, in order to achieve an acceleration in the exhausts flowing through the exhaust channel in this exhaust channel section, so that these flow with an increased speed over the outside of said wall section. The heat transfer coefficient with respect to the heat transfer from a flowing gas to a surface increases with increased flow rate of the gas. As the exhausts in the exhaust channel are brought to flow over the relevant wall section with increased speed, an increased heat transfer is thus achieved from the exhausts to this wall section, contributing to an effective heating of the wall section. Thus it becomes possible effectively to counteract the cooling down caused by the injected medium impacting said wall section. The increased heat transfer from the exhausts to the relevant wall section also contributes to an increased evaporation of the injected medium impacting this wall section. The solution according to the invention does not require the use of any heating fins or any other heat transfer elements, and is thus exceedingly simple and advantageous.

According to one embodiment of the invention, the first tubular wall has a variable thickness seen in the longitudinal direction of the mixing chamber, so that said wall section has a wall thickness which is greater than the wall thickness of those sections of the first tubular wall that are adjacent to this wall section. Because of the increased wall thickness of the section of the first tubular wall impacted by the spray from the injection element, this wall section becomes capable of taking up and storing a greater amount of heat from the passing exhausts compared to the other, thinner wall sections. Thus, the thickened wall section acquires an improved ability to counteract the cooling down caused by the injected medium impacting this section of the wall. The stored heat also contributes to an increased vaporisation of the injected medium impacting the relevant wall section. Because of its increased wall thickness, the relevant wall section also acquires an improved heat conducting ability, which means that the cooling action which is caused by the injected medium impacting the wall section is spread over a larger area. This spreading of the injected medium's cooling action leads to a reduced cooling down in the area impacted by the spray from the injection element.

Other favourable features of the arrangement according to the invention are set out in the non-independent patent claims and the description below.

### BRIEF DESCRIPTION OF THE DRAWING

The invention is described below with the help of example embodiments, with reference to the enclosed drawing. Shown in:
- Fig 1: is a schematic longitudinal section through an arrangement according to one embodiment of the present invention, and
- Fig 2: is a section according to the line II-II in Fig 1.

### DETAILED DESCRIPTION OF EMBODIMENTS ACCORDING TO THE INVENTION

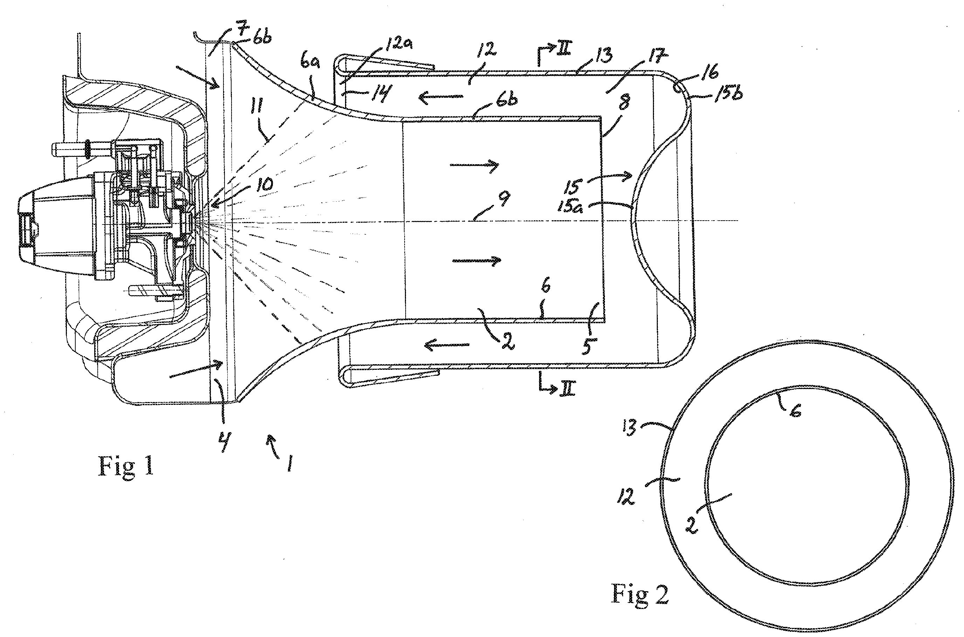

In Fig 1-2 an arrangement 1 according to one embodiment of the present invention to introduce a liquid medium into exhausts from a combustion engine is illustrated. The arrangement may for example be arranged inside an exhaust pipe upstream of an SCR-catalytist to introduce a liquid reduction agent in the form of urea or ammonia into the exhaust pipe upstream of the SCR-catalyst be arranged inside an exhaust after-treatment device to introduce a liquid reduction agent in the form of urea or ammonia upstream of an exhaust after-treatment device included in an SCR-catalyst.

The arrangement 1 comprises a mixing chamber 2 intended to receive exhausts from a combustion engine, and to lead these exhausts further in a direction toward an exhaust after-treatment device, for example in the form of an SCR-catalytist. The mixing chamber 2 is thus intended to be perfused by exhausts. The mixing chamber 2 has an upstream end 4 and a downstream end 5. The mixing chamber 2 is delimited in a radial direction outwards by a first tubular metal wall 6, extending between the mixing chamber's upstream end 4 and its downstream end 5. The mixing chamber 2 has an inlet 7 for receipt of exhausts at its upstream end and an outlet 8 for emission of exhausts at its downstream end. The inlet 7 is preferably annular and arranged to extend around the mixing chamber's central shaft 9. The mixing chamber 2 preferably has a circular cross sectional form, as illustrated in Fig 2.

An injection element 10 for injection of the liquid medium is arranged in the centre of the mixing chamber's upstream end 4, to inject the liquid medium in a direction toward the mixing chamber's downstream end 5. The injection element 10, which may for example comprise an injection nozzle, is arranged to inject the liquid medium into the mixing chamber 2 under pressure, in an atomised form as a spray 11.

The arrangement 1 comprises an exhaust channel 12 with an annular cross section, adjacent to the mixing chamber 2,and intended to be perfused by exhausts and extending along the outside of the first tubular wall 6. The exhaust channel 12 encloses the mixing chamber 2 and is concentric with this, as illustrated in Fig 2. The exhaust channel 12 and the mixing chamber 2 are delimited from each other by the first tubular wall 6. The exhaust channel 12 is delimited in a radial direction inwards by the tubular wall 6 and in a radial direction outwards by another tubular wall 13, designed to guide the exhausts flowing through the exhaust channel 12 so that they pass on the outside of the thickened wall section 6a of the first tubular wall, which is intended to be impacted by said spray 11 of a liquid medium from the injection element 10.

A throttle 14 is arranged in the section 12a of the exhaust channel located on the outside of said wall section 6a, in order to achieve an acceleration of the exhausts flowing through the exhaust channel 12 in this exhaust channel section 12a, so that these flow with an increased speed over the outside of said wall section 6a. At the throttle 14, the exhaust channel 12 has a cross sectional area which is smaller than the cross sectional area of the section of the exhaust channel which is located upstream of the throttle.

In the illustrated example the exhaust channel 12 is arranged downstream of the mixing chamber 2 and connected to the mixing chamber 2 via a flow reversal element 15, arranged to reverse the flow direction of the exhausts flowing from the mixing chamber 2, so that these are brought to flow through the exhaust channel 12 in a flow direction which is opposite to the flow direction of the exhausts in the mixing chamber 2. In the illustrated embodiment the flow reversal element 15 is arranged opposite the mixing chamber's outlet 8 and equipped with a middle section 15a and an annular edge section 15bsurrounding the middle section 15a. Said middle section 15a, facing the mixing chamber 2, preferably has a convex shape, as illustrated in Fig 1. The side of said edge section 15b, facing the mixing chamber 2, forms a guide surface 16 which is rounded in order to - during the reversal of the flow direction of these exhausts - direct the exhausts flowing toward the flow reversal element 15 into a flow directed toward the exhaust channel's annular inlet 17.

In the illustrated embodiment the first tubular wall 6 has a variable wall thickness seen in the longitudinal direction of the mixing chamber, so that the section 6a of the first tubular wall, which is intended to be impacted by said spray 11 of a liquid medium from the injection element 10, has a wall thickness which is greater than the wall thickness of the parts 6b of the first tubular wall adjacent to this wall section 6a. At its thickest section, the thickened wall section 6a preferably has a thickness which is at least 30% greater, and preferably 1.5-3 times greater, than the thickness of the wall's thinner section 6b. The wall's thinner section 6b may for example have a thickness of around 0.5-2 mm. The first tubular wall 6 may alternatively have a constant wall thickness throughout.

The spray 11 of a liquid medium which is injected into the mixing chamber 2 via the injection element 10 comes into contact with exhausts, flowing into the mixing chamber via the mixing chamber's inlet 7 in an essentially symmetric flow around this spray 11. The exhausts flowing into the mixing chamber 2 bring along the liquid medium downstream in the mixing chamber. While moving downstream in the mixing chamber 2, the liquid medium spreads into the exhausts and evaporates due to the exhaust heat. Liquid medium which is not evaporated impacts the above mentioned section 6a of the first tubular wall 6. The liquid medium which impacts this wall section 6a will be evaporated due to the hot wall surface and the hot exhausts. From the mixing chamber 2, the exhausts are led further to the exhaust channel 12. During their passage through the throttle 14 in the exhaust channel 12, the exhausts are accelerated and flow with an increased speed along the outside of said wall section 6a, while delivering heat to the same.

The arrangement according to the invention is intended to be used in a heavy goods vehicle, such as a bus, a towing vehicle or a truck.

## Claims

1. Arrangement to introduce a liquid medium, for example urea, into exhausts from a combustion engine, which arrangement (1) comprises:
- a mixing chamber (2) intended to be perfused by exhausts, wherein the mixing chamber (2) is delimited in a radial direction outwards by a first tubular metal wall (6) and which mixing chamber (2) has an upstream end (4) and a downstream end (5), and
- an injection element (10) for injection of the liquid medium as a spray (11) into the mixing chamber (2),
**characterised by**
- the arrangement (1) comprising an exhaust channel (12) arranged downstream of the mixing chamber (2) and adjacent to the mixing chamber (2), intended to be perfused by exhausts and extending along the outside of the first tubular wall (6), so that the exhaust channel (12) is delimited from the mixing chamber (2) by the first tubular wall (6), and connected to the mixing chamber (2) via a flow reversal element (15), which is arranged to reverse the flow direction of the exhausts flowing from the mixing chamber (2), so that these are brought to flow through the exhaust channel (12) in a flow direction which is opposite that of the exhaust flow direction in the mixing chamber (2).
- the exhaust channel (12) being delimited in a radial direction outwards by a second tubular wall (13), which is designed to guide the exhausts flowing through the exhaust channel (12) so that they pass on the outside of the wall section (6a) of the first tubular wall (6), which is intended to be impacted by said spray (11) of a liquid medium from the injection element (10), and
- a throttle (14) being arranged in the section (12a) of the exhaust channel (12), which is located closest to the upstream end of the mixing chamber, on the outside of said wall section (6a), in order to achieve an acceleration of the exhausts flowing through the exhaust channel (12) in the exhaust channel section (12a), so that these flow with an increased speed over the outside of said wall section (6a).

2. Arrangement according to claim 1, **characterised by** the exhaust channel (12) and the mixing chamber (2) being concentric.

3. Arrangement according to any of claims 1 or 2, **characterised by** the first tubular wall (6) having a variable wall thickness seen in the longitudinal direction of the mixing chamber, so that said wall section (6a) has a wall thickness which is greater than the wall thickness of the sections of the first tubular wall (6) that are adjacent to this wall section (6a).

4. Arrangement according to any of claims 1-3, **characterised by** the injection element (10) being arranged in the centre of the mixing chamber's upstream end (4) and arranged to inject the liquid medium in a direction toward the mixing chamber's downstream end (5).

## Patentansprüche

1. Anordnung zum Einführen eines flüssigen Mediums, zum Beispiel Harnstoff, in Abgase eines Verbrennungsmotors, wobei die Anordnung (1) umfasst:
- eine Mischkammer (2), die dazu vorgesehen ist, von Abgasen durchströmt zu werden, wobei die Mischkammer (2) in eine radiale Richtung nach außen hin von einer ersten rohrförmigen Metallwandung (6) begrenzt ist, und wobei die Mischkammer (2) ein zuströmseitiges Ende (4) und ein abströmseitiges Ende (5) aufweist, und
- ein Einspritzelement (10) zum Einspritzen des flüssigen Mediums als Sprühnebel (11) in die Mischkammer (2) hinein,
**gekennzeichnet**
- **dadurch, dass** die Anordnung (1) einen Auslasskanal (12) umfasst, der abströmseitig der Mischkammer (2) und der Mischkammer (2) benachbart angeordnet ist, der dazu vorgesehen ist, von Abgasen durchströmt zu werden, und der sich entlang der Außenseite der ersten rohrförmigen Wandung (6) derart erstreckt, dass der Auslasskanal (12) von der Mischkammer (2) durch die erste rohrförmige Wandung (6) abgegrenzt wird, und der mit der Mischkammer (2) über ein Flussumkehrelement (15) verbunden ist, das dazu eingerichtet ist, die Flussrichtung der Abgase, die von der Mischkammer (2) wegfließen, derart umzukehren, dass diese dazu gebracht werden, durch den Auslasskanal (12) in eine Flussrichtung zu fließen, die derjenigen der Abgasflussrichtung in der Mischkammer (2) entgegengesetzt ist,
- dadurch, dass der Auslasskanal (12) in eine radiale Richtung nach außen hin von einer zweiten rohrförmigen Wandung (13) begrenzt ist, die dazu ausgestaltet ist, die Abgase, die durch den Auslasskanal (12) fließen, derart zu führen, dass sie an der Außenseite des Wandabschnitts (6a) der ersten rohrförmigen Wandung (6) vorbeitreten, der dazu vorgesehen ist, von dem Sprühnebel (11) eines flüssigen Mediums von dem Einspritzelement (10) getroffen zu werden, und
- durch eine Drossel (14), die in dem Abschnitt (12a) des Auslasskanals (12), welcher dem zuströmseitigen Ende der Mischkammer am nächsten ist, an der Außenseite des Wandabschnitts (6a) angeordnet ist, um eine Beschleunigung der Abgase zu erzielen, die durch den Auslasskanal (12) in dem Auslasskanalabschnitt (12a) fließen, sodass diese mit erhöhter Geschwindigkeit über die Außenseite des Wandabschnitts (6a) fließen.

2. Anordnung gemäß Anspruch 1, **dadurch gekennzeichnet, dass** der Auslasskanal (12) und die Mischkammer (2) konzentrisch sind.

3. Anordnung gemäß Anspruch 1 oder 2, **dadurch gekennzeichnet, dass** die erste rohrförmige Wandung (6) in die longitudinale Richtung der Mischkammer betrachtet eine veränderliche Wandstärke derart aufweist, dass der Wandabschnitt (6a) eine Wandstärke aufweist, die größer ist als die Wandstärke der Abschnitte der ersten rohrförmigen Wandung (6), die diesem Wandabschnitt (6a) benachbart sind.

4. Anordnung gemäß einem der Ansprüche 1 bis 3, **dadurch gekennzeichnet, dass** das Einspritzelement (10) in der Mitte des zuströmseitigen Endes (4) der Mischkammer angeordnet und dazu eingerichtet ist, das flüssige Medium in eine Richtung auf das abströmseitige Ende (5) der Mischkammer zu einzuspritzen.

## Revendications

1. Agencement pour introduire un milieu liquide, par exemple de l'urée, dans des gaz d'échappement d'un moteur à combustion, cet agencement (1) comprenant :
- une chambre de mélange (2) destinée à être parcourue par des gaz d'échappements, la chambre de mélange (2) étant délimitée dans une direction radiale vers l'extérieur par une première paroi métallique tubulaire (6), et cette chambre de mélange (2) comportant une extrémité amont (4) et une extrémité aval (5), et
- un élément d'injection (10) pour l'injection du milieu liquide sous la forme d'un spray (11) dans la chambre de mélange (2),
**caractérisé en ce que** :
- l'agencement (1) comprend un canal d'échappement (12) disposé en aval de la chambre de mélange (2) et au voisinage de la chambre de mélange (2), destiné à être parcouru par des gaz d'échappements et s'étendant le long de l'extérieur de la première paroi tubulaire (6), de sorte que le canal d'échappement (12) est délimité à partir de la chambre de mélange (2) par la première paroi tubulaire (6), et relié à la chambre de mélange (2) par l'intermédiaire d'un élément d'inversion d'écoulement (15), qui est agencé de façon à inverser la direction d'écoulement des gaz d'échappement s'écoulant à partir de la chambre de mélange (2), de sorte que ceux-ci sont amenés à s'écouler à travers le canal d'échappement (12) dans une direction d'écoulement qui est opposée à celle de la direction d'écoulement d'échappement dans la chambre de mélange (2),
- le canal d'échappement (12) est délimité dans une direction radiale vers l'extérieur par une deuxième paroi tubulaire (13), qui est conçue de façon à guider les gaz d'échappement s'écoulant à travers le canal d'échappement (12) de sorte qu'ils passent sur l'extérieur de la section de paroi (6a) de la première paroi tubulaire (6), qui est destinée à être frappée par ledit spray (11) d'un milieu liquide à partir de l'élément d'injection (10), et
- un accélérateur (14) est disposé dans la section (12a) du canal d'échappement (12), qui est disposé au plus près de l'extrémité amont de la chambre de mélange, sur l'extérieur de ladite section de paroi (6a), de façon à réaliser une accélération des gaz d'échappement s'écoulant à travers le canal d'échappement (12) dans la section de canal d'échappement (12a), de sorte que ceux-ci (10a) s'écoulent avec une vitesse accrue sur l'extérieur de ladite section de paroi (6a).

2. Agencement selon la revendication 1, **caractérisé en ce que** le canal d'échappement (12) et la chambre de mélange (2) sont concentriques.

3. Agencement selon l'une quelconque des revendications 1 ou 2, **caractérisé en ce que** la première paroi tubulaire (6) a une épaisseur de paroi variable, vue dans la direction longitudinale de la chambre de mélange, de sorte que ladite section de paroi (6a) a une épaisseur de paroi qui est supérieure à l'épaisseur de paroi des sections de la première paroi tubulaire (6) qui sont voisines de cette section de paroi (6a).

4. Agencement selon l'une quelconque des revendications 1 à 3, **caractérisé en ce que** l'élément d'injection (10) est disposé dans le centre de l'extrémité amont (4) de la chambre de mélange, et agencé de façon à injecter le milieu liquide dans une direction vers l'extrémité aval (5) de la chambre de mélange.
